# EUROPÄISCHE PATENTSCHRIFT

(11) **EP 4 211 572 B1**
(45) Veröffentlichungstag und Bekanntmachung des Hinweises auf die Patenterteilung: **30.07.2025**
(21) Anmeldenummer: 21772665.2
(22) Anmeldetag: 08.09.2021
(51) Int. Cl.: G06F 16/957

(54) **VERFAHREN ZUR NACHVERFOLGUNG VON BENUTZERINTERAKTIONEN MIT WEBSEITEN**
METHOD OF TRACKING USER INTERACTIONS ON WEB PAGES
MÉTHODE DE SUIVI DES INTERACTIONS DES UTILISATEURS SUR LES PAGES WEB

(30) Priorität: 11.09.2020 AT 602812020
(43) Veröffentlichungstag der Anmeldung: 19.07.2023
(73) Patentinhaber: Jentis GmbH, 1120 Wien (AT)
(72) Erfinder: TAUCHNER, Thomas, 2305 Eckartsau (AT); PARIGGER, Walter, 6092 Birgitz (AT); KLETZANDER, Christian, 2273 Hohenau/March (AT)
(74) Vertreter: Wildhack & Jellinek Patentanwälte GmbH
(86) Internationale Anmeldenummer: PCT/AT2021/060319
(87) Internationale Veröffentlichungsnummer: WO 2022/051791

(56) Entgegenhaltungen:
- EP-A1- 3 648 431
- US-A1- 2018 191 798
- US-B1- 10 616 274

## Beschreibung

Die Erfindung betrifft ein Verfahren zum Erfassen und Verteilen von Benutzerinteraktionen in einem Webbrowser. Weiters betrifft die Erfindung eine Anordnung zum Erfassen und Verteilen von Benutzerinteraktionen.

Aus dem Stand der Technik sind unterschiedliche Varianten und Vorgehensweisen bekannt, mit denen es möglich ist, Vorgänge, die auf einem Web-Client ablaufen, zu erfassen, abzuspeichern und gegebenenfalls für eine weitere Verwendung zur Verfügung zu halten. P Ein Beispiel hierfür ist US 10 616 274 B1.

Ein häufiges Problem tritt auf, wenn auf Seiten des Web-Client beabsichtigt oder zufällig einzelne in der Web-Anwendung benötigte Funktionen nicht zur Verfügung stehen, unterdrückt werden oder unrichtig ausgeführt werden. In diesem Fall ist es dann nicht möglich, die Benutzerinteraktionen im Webbrowser korrekt zu erfassen und entsprechend zu verarbeiten.

Gerade im Zusammenhang mit sogenannten Ad-Blockern oder ähnlichen Arten von Sicherheitssoftware, die bestimmte Systemaufrufe proaktiv unterdrücken, können im Einzelfall Probleme auftreten. In einer Vielzahl von Fällen, in denen die Benutzer ihr Einverständnis zur Datenübermittlung erteilt haben und diese sogar an einer Datenübermittlung aktiv interessiert sind, führt die Verwendung von Ad-Blockern dazu, dass die Datenübermittlung nicht oder nur teilweise erfolgt, sodass die Funktion der verwendeten Webseite nicht oder nur eingeschränkt möglich ist. In diesen Fällen stellen also Ad-Blocker oder ähnliche Tools ein Hindernis dar, sodass es erforderlich ist, die bereits erfolgte Einwilligung des Benutzers auf andere Weise umzusetzen.

Die Erfindung löst diese Aufgabe bei dem Verfahren der eingangs genannten **Art.**

Erfindungsgemäß sind bei einem Verfahren zum Erfassen und Verteilen von Benutzerinteraktionen in einem Webbrowser die folgenden Schritte vorgesehen:
- die Übertragung des Inhalts einer Webseite von einem Webserver an einen Client, wobei der Webseiteninhalt einen Synchronisierungsskript aufweist, der dazu ausgebildet ist, eine Verbindung zwischen dem Client und einem, insbesondere auf einem weiteren Server ablaufenden, Emulationssystem aufzubauen,
- das Ausführen des Synchronisierungsskripts mittels des Clients, wodurch eine Verbindung zwischen dem Client und dem Emulationssystem aufgebaut wird,
- das Übermitteln von mittels des Clients erfassten Erfassungsdaten über die Verbindung, sodass Benutzerinteraktionen und darauffolgende Reaktionen des Webseiteninhalts im Client durch das Emulationssystem emuliert werden und zur Verfügung stehen, sowie
- die Konfiguration des Emulationssystems dahingehend, dass bei Vorliegen bestimmter Benutzerinteraktionen oder Reaktionen des übermittelten Webseiteninhalts diesbezügliche Meldungen an einen oder mehrere weitere Server versendet werden.

Um zusätzliche Eingaben erfassen und verarbeiten zu können, kann vorgesehen sein, dass das Emulationssystem vorab für die Webseite des Webservers konfiguriert wird, sodass der Webserver dem Client im Synchronisierungsskript einen zusätzlichen Codeteil übermittelt, der den Client zur Ermittlung weiterer Erfassungsdaten veranlasst, und das Emulationssystem aufgrund der Konfiguration und/oder des ihm vom Client übermittelten Webseiteninhalts die weiteren Erfassungsdaten verarbeitet.

Ein flexibleres Vorgehen wird ermöglicht, indem das Emulationssystem vorab für den Webseiteninhalt des Webservers konfiguriert wird, sodass das Emulationssystem bei Übermittlung von Erfassungsdaten und gegebenenfalls weiterer Erfassungsdaten, die von der Ausführung des betreffenden Webseiteninhalts stammen, die Ausführung vorab in der Konfiguration vorgegebener Schritte veranlasst.

Eine Anpassung an unterschiedliche Darstellungen auf Client-Rechnern kann einfach bewirkt werden, indem der Client Informationen betreffend die Anordnung und/oder Position einzelner Elemente, insbesondere Bedienelemente, im Anzeigebereich des Clients an das Emulationssystem übermittelt und dass eine Benutzerinteraktion dann als erfolgt gilt, wenn die Erfassungsdaten Bildpositionen betreffen, die durch die Informationen festgelegt sind.

Erfindungsgemäß ist bei einer Anordnung vorgesehen, dass der Webserver zur Übertragung des Inhalts einer des Webseiteninhalts einer Webseite an einen Client auf Anfrage ausgebildet ist, wobei der Webseiteninhalt ein Synchronisierungsskript aufweist, das dazu ausgebildet ist, eine Verbindung zwischen dem Client und einem, insbesondere auf einem weiteren Server ablaufenden, Emulationssystem aufzubauen, dass der Client über einen benutzerbedienbaren Webbrowser verfügt, der dazu ausgebildet ist, das Synchronisierungsskript auszuführen, und damit eine Verbindung zwischen dem Client und dem Emulationssystem aufzubauen und im Synchronisierungsskript vorgegebene Erfassungsdaten zu erfassen und über die Verbindung an das Emulationssystem zu übertragen, dass das Emulationssystem, dazu ausgebildet ist, Benutzerinteraktionen und darauffolgende Reaktionen des Webseiteninhalts im Client durch das Emulationssystem zu emulieren, und dass das Emulationssystems so konfiguriert ist, dass bei Vorliegen bestimmter Benutzerinteraktionen oder Reaktionen des übermittelten Webseiteninhalts diesbezügliche Meldungen an einen oder mehrere weitere Server versendet werden.

Um zusätzliche Eingaben erfassen und verarbeiten zu können, kann vorgesehen sein, dass das Emulationssystem vorab für den Webseiteninhalt des Webservers konfiguriert ist, sodass der Webserver dem Client im Synchronisierungsskript einen zusätzlichen Codeteil übermittelt, der den Client zur Ermittlung weiterer Erfassungsdaten veranlasst, und sodass das Emulationssystem dazu ausgebildet ist, aufgrund der Konfiguration und/oder des ihm vom Client übermittelten Webseiteninhalts die weiteren Erfassungsdaten zu verarbeiten.

Ein flexiblerer Betrieb der Anordnung wird ermöglicht, indem das Emulationssystem vorab derart für den Webseiteninhalt der Webseite des Webservers konfiguriert ist, dass das Emulationssystem bei Übermittlung von Erfassungsdaten und gegebenenfalls weiterer Erfassungsdaten, die von der Ausführung des betreffenden Webseiteninhalts stammen, die Ausführung vorab in der Konfiguration vorgegebener Schritte veranlasst.

In der **Figur** ist eine Anordnung gemäß einer ersten Ausführungsform der Erfindung näher dargestellt. Diese Anordnung umfasst einen Webserver 100, auf dem eine Webseite zur Verfügung gestellt wird. Bei der vom Webserver 100 zur Verfügung gestellten Anwendungen bzw. Webseite kann es sich um eine beliebig komplizierte Anwendung handeln.

Insbesondere können im Zusammenhang mit der Erfindung beliebige serverseitige und clientseitige Automatisierungsprozesse verbunden sein. Beispielsweise kann serverseitig eine Datenbank 101 zur Verfügung gestellt werden, deren Inhalt bei der Erstellung einzelner, vom Webserver 100 an einen Client 200 übermittelter, Webseiteninhalte 150 herangezogen wird.

Der Client 200 ist mit dem Webserver 100 verbunden. Auf ihm ist ein Webbrowser 201 installiert, der über die Möglichkeit verfügt, lokal Skripte, typischerweise in der Programmiersprache Java-Script verfasst, ablaufen zu lassen, die ihm vom Webserver 100 übermittelt wurden.

Im vorliegenden Ausführungsbeispiel übermittelt der Client 200 bzw der Webbrowser 201 dem Webserver 100 eine Seitenanfrage. Der Webserver 100 übermittelt daraufhin dem Client 200 den Inhalt der Seite bzw. den Webseiteninhalt 150, wobei der Webserver 100 dem Client 200 im Webseiteninhalt 150 auch noch ein Synchronisierungsskript 151 mit übermittelt. Dieses Synchronisierungsskript 151 wird typischerweise automatisch gestartet, wenn der Webseiteninhalt 150 im Webbrowser 201 des Clients 200 dargestellt wird. Alternativ besteht jedoch auch die Möglichkeit, das Synchronisierungsskript 151 erst dann zu starten, wenn der Benutzer dies bestätigt oder wenn der Benutzer das Synchronisierungsskript 151 aktiv aufruft.

Das Synchronisierungsskript 151 ist während der Darstellung und Benutzung der Webseite bzw. des Webseiteninhalts 150 auf dem Client 200 bzw im Webbrowser 201 aktiv und erfüllt gleichzeitig zwei unterschiedliche Funktionen:
Zum einen baut das Synchronisierungsskript 151 eine dauerhafte Kommunikation 250 mit einem Emulationssystem 300 auf. Die im Synchronisierungsskript 151 enthaltene Logik hat den Zweck, dass einzelne oder alle Zustandsinformationen der betreffenden Webseite gleichermaßen im Client 200 wie auch auf dem Emulationssystem 300 zur Verfügung stehen. Dieses Emulationssystem 300 befindet sich typischerweise auf einem weiteren Server, der vom Webserver 100 unabhängig ist und mit diesem in Datenkommunikationsverbindung steht. Das Emulationssystem 300 ist im Synchronisierungsskript 151 festgelegt, sodass der Client 200 bzw der Webbrowser 201 unmittelbar nach dem Beginn der Darstellung des Webseiteninhalts 150 eine solche Kommunikation 250 aufbaut. Bevorzugterweise läuft das Synchronisierungsskript 151 während der gesamten Anzeigedauer des Webseiteninhalts 150 weiter und wird erst dann beendet, wenn der Webseiteninhalt 150 auf dem Webbrowser 201 nicht mehr dargestellt wird.

Zum anderen ermittelt das auf dem Client 200 ablaufende Synchronisierungsskript 151 während der Darstellung des Webseiteninhalts 150 diejenigen Benutzeraktionen, Reaktionen und gegebenenfalls weitere Ereignisse, die für die weitere Analyse des Benutzerverhaltens erforderlich sind und dementsprechend im Synchronisierungsskript 151 festgelegt wurden, erfasst. So besteht zum Beispiel die Möglichkeit, während der Darstellung einer Webseite die folgenden Erfassungsdaten 251 zu erfassen:
* Verlauf des Mauszeigers
* Berührungen des Tagesspiegels und Mausklicks
* Betätigung von Schaltflächen
* der Umstand, dass sich der Mauszeiger über einer Schaltfläche befindet
* Ereignisse, die sich als Konsequenzen von Benutzerinteraktionen und gegebenenfalls weiterer Daten ergeben
* Tastatureingaben
* Datum und Uhrzeit
* Angaben zum verwendeten Webbrowser
* Angaben zum Clientsystem
* Länge und Breite des Browserfensters

Sämtlichen der Erfassungsdaten 251 werden vom Client 200 über die Verbindung 250 an das Emulationssystem 300 übermittelt, um im Emulationssystem 300 den Zustand des Clients 200 nachbilden zu können. In diesem Emulationssystem 300 läuft eine Emulation der Webseite ab, wie sie auch im Client 200 mit dem Webbrowser 201 dargestellt wird. Um die Emulation zu starten, kann beispielsweise vorgesehen sein, dass das Emulationssystem 300 unmittelbar beim Beginn des Aufbaus der Verbindung 250 eine Webseite aufruft, um den Webseiteninhalt 150 emulieren zu können. Die Aufgabe des Emulationssystems 300 ist es, sämtliche Benutzerinteraktionen und Programmreaktionen des Benutzers auf dem Client 200 bzw Webbrowser 201 sowie die Programmierung der Webseite so nachzubilden, wie dies auf dem Webbrowser 201 tatsächlich stattfindet. Aufgrund der Erfassungsdaten 251 betreffend den Webbrowser 201 sowie das verwendete Browserfenster ist es dem Emulationssystem 300 möglich, Mausbewegungen und -betätigungen sowie deren Positionen zu ermitteln und diese Positionen und diese einzelnen Schaltflächen der Webseite zuzuordnen, wie dies auch im Webbrowser 201 auf dem Client 200 geschieht.

Das Synchronisationsskript 151 bewirkt auch, dass einzelne Informationen 253 darüber, wie die Webseite auf dem Client 200 konkret dargestellt und/oder aufgebaut ist oder funktioniert, ebenfalls an das Emulationssystem 300 übermittelt werden. Beispielsweise können solche Informationen 253 die konkrete Position einzelner Bedienelemente auf dem Bildschirm des Client 200 betreffen.

Auf diese Weise kann auch im Emulationssystem 300 ohne weiteres herausgefunden werden, dass der Benutzer einer Webseite auf eine Schaltfläche klickt.

Gerade dann, wenn sich die einzelnen Positionen von Bedienelementen aufgrund der unterschiedlichen Größe des auf dem Client zur Verfügung stehenden Displays ändern, kann die Betätigung eines Bedienelements dann erkannt werden, wenn der Client 200 Informationen 253 betreffend die Anordnung und/oder Position einzelner Elemente in seinem Anzeigebereich an das Emulationssystem übermittelt. Beispielhaft können etwa die Koordinatenbegrenzungen eines rechteckigen Bedienfelds als solche Informationen 253 übertragen werden. Eine Benutzerinteraktion gilt dann als erfolgt, wenn die Erfassungsdaten 251, beispielsweise die Position des Mauszeigers oder die Druckposition auf einem Touchscreen Bildpositionen betreffen, die durch die Informationen 253 festgelegt sind, beispielsweise innerhalb des durch die Informationen festgelegten rechteckigen Bildbereichs des Bedienfelds befinden.

Verhindert nun eine lokal auf dem Client 200 ablaufende Sicherheitssoftware 202 auf dem Client 200, dass ein der Schaltfläche zugeordnetes Skript auf dem Client 200 ausgeführt wird, behindert dies nicht die vorliegende Anordnung. Eine der Sicherheitssoftware 202 entsprechende Software ist auf dem Emulationssystem 300 gerade nicht installiert, sodass auf dem Emulationssystem 300 das betreffende Skript ausgeführt wird. Es ist daher möglich, dass das der Schaltfläche zugeordnete Skript auf dem Emulationssystem 300 ausgeführt wird, auch wenn eine Sicherheitssoftware 202 die Ausführung des Skripts auf dem Client 200 verhindern würde.

Ist es beispielsweise der Zweck des Skripts, bei Betätigung der Schaltfläche Informationen 270 an einen Tracking-Server 400 zu übertragen, deren Übertragung die clientseitige Software bzw. die Sicherheitssoftware 202 verhindern möchte, so kann diese Datenübertragung vom weiteren Server aus durchgeführt werden.

Grundsätzlich ist es nicht erforderlich, den Webserver 100 und das Emulationssystem 300 vorab aufeinander abzustimmen. Wird ein für das Emulationssystem 300 zur Verfügung gestelltes Synchronisierungsskript 151 verwendet, kann das Emulationssystem 300 grundsätzlich die Nutzung der Webseite bzw. des Webseiteninhalts 150 durch den Client 200 auf dem Webbrowser 201 emulieren. In einer bevorzugten Ausführungsform der Erfindung kann vor der Durchführung der Emulation noch eine Konfiguration des Webservers 100 mit dem Emulationssystem 300 vorgenommen werden.

Eine erste Konfiguration betrifft die Erfassungsdaten 251. Viele Anwendungen verwenden neben den typischen, auf Webseiten verwendeten, Eingaben auch noch weitere Eingaben wie beispielsweise Audio- oder Kameradaten, Sensoren **u.ä.** Diese Daten zählen nicht zu den typischen Erfassungsdaten 251 und werden demgemäß standardmäßig nicht erfasst.

Im zweiten Ausführungsbeispiel der Erfindung wird eine Webseite verwendet, die diese zusätzlichen Daten benötigt. Daher wird vorab eine Konfiguration vorgenommen, bei der dem Emulationssystem 300 mitgeteilt wird, dass für die Webseiteninhalt 150 dieser Webseite neben den typischen Erfassungsdaten 251 noch besondere Erfassungsdaten 252, nämlich Audio und Beschleunigung mit übermittelt werden.

Das Emulationssystem 300 verfügt in diesem Fall über einen zusätzlichen emulierten Audio-Eingang sowie einen zusätzlichen emulierten Sensoreingang, der von den weiteren Erfassungsdaten 252 gespeist wird, die vom Client 200 übertragen werden.

Der Client 200 erhält seinerseits ein abgeändertes Synchronisierungsskript 151, das den Client 200 zur Übertragung des bei ihm aufgenommenen Audio-Signals sowie der Beschleunigungsinformationen veranlasst.

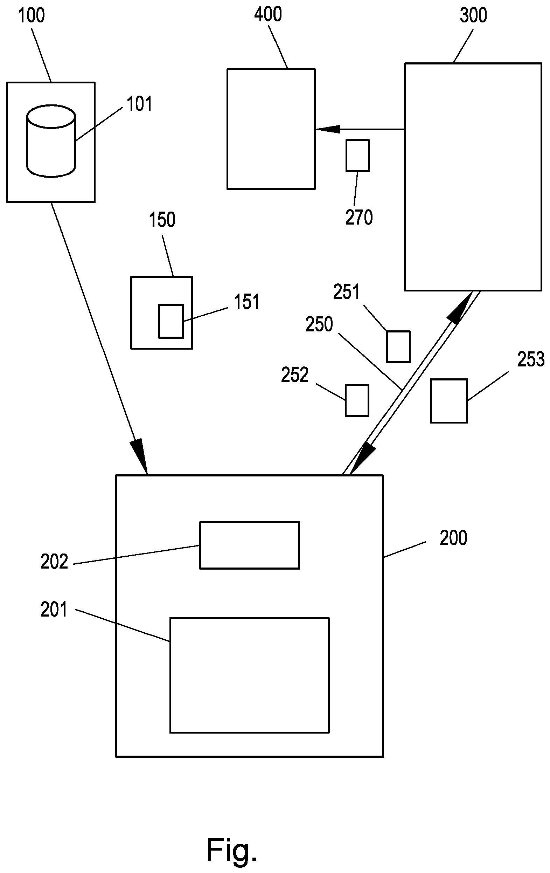

## Patentansprüche

1. Verfahren zum Erfassen und Verteilen von Benutzerinteraktionen in einem Webbrowser umfassend die folgenden Schritte:
- Übertragung des Inhalts einer Webseite (150) von einem Webserver (100) an einen Client (200), wobei der Webseiteninhalt (150) ein Synchronisierungsskript (151) aufweist, das dazu ausgebildet ist, eine Verbindung (250) zwischen dem Client (200) und einem auf einem weiteren Server ablaufenden Emulationssystem (300) aufzubauen,
- Ausführen des Synchronisierungsskripts (151) mittels des Clients (200), wodurch eine Verbindung (250) zwischen dem Client (200) und dem Emulationssystem (300) aufgebaut wird,
- wobei das Synchronisationsskript (151) bewirkt, dass Informationen (253) darüber, wie die Webseite auf dem Client (200) konkret dargestellt und/oder aufgebaut ist und/oder funktioniert, ebenfalls an das Emulationssystem (300) übermittelt werden,
- Übermitteln von mittels des Clients (200) erfassten Erfassungsdaten über die Verbindung (250), sodass Benutzerinteraktionen und darauffolgende Reaktionen des Webseiteninhalts (150) im Client (200) durch das Emulationssystem (300) emuliert werden und zur Verfügung stehen,
- Konfiguration des Emulationssystems (300) dahingehend, dass bei Vorliegen bestimmter Benutzerinteraktionen oder Reaktionen des übermittelten Webseiteninhalts (150) diesbezügliche Meldungen an einen oder mehrere weitere Server (400) versendet werden.

2. Verfahren nach Anspruch 1, **dadurch gekennzeichnet, dass** das Emulationssystem (300) vorab für die Webseite (150) des Webservers (100) konfiguriert wird, sodass
- der Webserver (100) dem Client (200) im Synchronisierungsskript (151) einen zusätzlichen Codeteil übermittelt, der den Client (200) zur Ermittlung weiterer Erfassungsdaten veranlasst,
- das Emulationssystem (300) aufgrund der Konfiguration und/oder des ihm vom Client (200) übermittelten Webseiteninhalts (150) die weiteren Erfassungsdaten verarbeitet.

3. Verfahren nach Anspruch 1 oder 2, **dadurch gekennzeichnet, dass** das Emulationssystem (300) vorab für den Webseiteninhalt (150) des Webservers (100) konfiguriert wird, sodass das Emulationssystem (300) bei Übermittlung von Erfassungsdaten (251) und gegebenenfalls weiterer Erfassungsdaten (252), die von der Ausführung des betreffenden Webseiteninhalts (150) stammen, die Ausführung vorab in der Konfiguration vorgegebener Schritte veranlasst.

4. Verfahren nach einem der Ansprüche 1 bis 3, **dadurch gekennzeichnet, dass** der Client (200) Informationen (253) betreffend die Anordnung und/oder Position einzelner Elemente, insbesondere Bedienelemente, im Anzeigebereich des Clients (200) an das Emulationssystem (300) übermittelt und dass eine Benutzerinteraktion dann als erfolgt gilt, wenn die Erfassungsdaten (251) Bildpositionen betreffen, die durch die Informationen (253) festgelegt sind.

5. Verfahren nach einem der vorangehenden Ansprüche, wobei im Emulationssystem (300) eine Emulation der Webseite abläuft, wie sie auch im Client (200) mit dem Webbrowser (201) dargestellt wird, wobei das Emulationssystems (300) sämtliche Benutzerinteraktionen und Programmreaktionen des Benutzers auf dem Client (200) und dessen Webbrowser (201) sowie die Programmierung der Webseite so nachbildet, wie dies auf dem Webbrowser (201) tatsächlich stattfindet, und
wobei das Emulationssystem (300) aufgrund der Erfassungsdaten (251) betreffend den Webbrowser (201) sowie das verwendete Browserfenster, Mausbewegungen und -betätigungen sowie deren Positionen ermittelt und diese Positionen und diese einzelnen Schaltflächen der Webseite zuordnet, wie dies auch im Webbrowser (201) auf dem Client (200) geschieht.

6. Anordnung zum Erfassen und Verteilen von Benutzerinteraktionen, umfassend einen Webserver (100), einen Client (200) und ein Emulationssystem (300), wobei
- der Webserver (100) zur Übertragung des Webseiteninhalts (150) einer Webseite an einen Client (200) auf Anfrage ausgebildet ist, wobei der Webseiteninhalt (150) ein Synchronisierungsskript (151) aufweist, das dazu ausgebildet ist, eine Verbindung (250) zwischen dem Client (200) und einem, auf einem weiteren Server ablaufenden, Emulationssystem (300) aufzubauen,
- wobei das Synchronisationsskript (151) bewirkt, dass Informationen (253) darüber, wie die Webseite auf dem Client (200) konkret dargestellt und/oder aufgebaut ist und/oder funktioniert, ebenfalls an das Emulationssystem (300) übermittelt werden,
- der Client (200) über einen benutzerbedienbaren Webbrowser (201) verfügt, der dazu ausgebildet ist, das Synchronisierungsskript (151) auszuführen, und damit
-- eine Verbindung (250) zwischen dem Client (200) und dem Emulationssystem (300) aufzubauen, und
-- im Synchronisierungsskript (151) vorgegebene Erfassungsdaten (251; 252) zu erfassen und über die Verbindung (250) an das Emulationssystem (300) zu übertragen,
- wobei das Emulationssystem (300), dazu ausgebildet ist, Benutzerinteraktionen und darauffolgende Reaktionen des Webseiteninhalts (150) im Client (200) durch das Emulationssystem (300) zu emulieren, und
- wobei das Emulationssystems (300) so konfiguriert ist, dass bei Vorliegen bestimmter Benutzerinteraktionen oder Reaktionen des übermittelten Webseiteninhalts (150) diesbezügliche Meldungen an einen oder mehrere weitere Server versendet werden.

7. Anordnung nach Anspruch 6, **dadurch gekennzeichnet, dass** das Emulationssystem (300) vorab für den Webseiteninhalt (150) des Webservers (100) konfiguriert ist, sodass
- der Webserver (100) dem Client (200) im Synchronisierungsskript (151) einen zusätzlichen Codeteil übermittelt, der den Client (200) zur Ermittlung weiterer Erfassungsdaten veranlasst,
- das Emulationssystem (300) dazu ausgebildet ist, aufgrund der Konfiguration und/oder des ihm vom Client (200) übermittelten Webseiteninhalts (150) die weiteren Erfassungsdaten zu verarbeiten.

8. Anordnung nach Anspruch 6 oder 7, **dadurch gekennzeichnet, dass** das Emulationssystem (300) vorab derart für den Webseiteninhalt (150) der Webseite des Webservers (100) konfiguriert ist, dass das Emulationssystem (300) bei Übermittlung von Erfassungsdaten (251) und gegebenenfalls weiterer Erfassungsdaten (252), die von der Ausführung des betreffenden Webseiteninhalts (150) stammen, die Ausführung vorab in der Konfiguration vorgegebener Schritte veranlasst.

9. Anordnung nach einem der Ansprüche 6 bis 8, wobei das Emulationssystem (300) dazu ausgebildet ist, eine Emulation der Webseite ablaufen zu lassen, wie sie auch im Client (200) mit dem Webbrowser (201) dargestellt wird, wobei das Emulationssystem (300) sämtliche Benutzerinteraktionen und Programmreaktionen des Benutzers auf dem Client (200) und dessen Webbrowser (201) sowie die Programmierung der Webseite so nachbildet, wie dies auf dem Webbrowser (201) tatsächlich stattfindet, und
wobei das Emulationssystem (300) aufgrund der Erfassungsdaten (251) betreffend den Webbrowser (201) sowie das verwendete Browserfenster, Mausbewegungen und -betätigungen sowie deren Positionen ermittelt und diese Positionen und diese einzelnen Schaltflächen der Webseite zuordnet, wie dies auch im Webbrowser (201) auf dem Client (200) geschieht.

## Claims

1. Method for acquiring and distributing user interactions in a web browser, the method comprising the following steps of:
- transmitting the content of a web page (150) from a web server (100) to a client (200), wherein the web page content (150) has a synchronization script (151) designed to establish a connection (250) between the client (200) and an emulation system (300) running on a further server,
- executing the synchronization script (151) by means of the client (200), as a result of which a connection (250) between the client (200) and the emulation system (300) is established,
- wherein the synchronization script (151) causes information (253) regarding how the web page is specifically displayed and/or structured and/or functions on the client (200) to also be transmitted to the emulation system (300),
- transmitting acquisition data acquired by means of the client (200) via the connection (250), with the result that user interactions and subsequent reactions of the web page content (150) are emulated in the client (200) by the emulation system (300) and are available,
- configuring the emulation system (300) such that the presence of specific user interactions or reactions of the transmitted web page content (150) results in messages in this regard being sent to one or more further servers (400).

2. Method according to claim 1, **characterized in that** the emulation system (300) is configured in advance for the web page (150) of the web server (100) such that
- the web server (100) transmits an additional code portion in the synchronization script (151) to the client (200), which code portion prompts the client (200) to ascertain further acquisition data,
- the emulation system (300) processes the further acquisition data based on the configuration and/or the web page content (151) transmitted by the client (200) to the emulation system.

3. Method according to claim 1 or 2, **characterized in that** the emulation system (300) is configured in advance for the web page content (150) of the web server (100) such that upon transmission of acquisition data (251) and optionally further acquisition data (252) originating from the execution of the respective web page content (150), the emulation system (300) prompts the execution of steps specified in advance in the configuration.

4. Method according to any one of claims 1 to 3, **characterized in that** the client (200) transmits information (253) relating to the arrangement and/or position of individual elements, in particular operating elements, in the display region of the client (200) to the emulation system (300) and that a user interaction is considered to have occurred when the acquisition data (251) relate to image positions defined by the information (253).

5. Method according to any one of the preceding claims, wherein an emulation of the web page runs in the emulation system (300) as it is also displayed in the client (200) with the web browser (201), wherein the emulation system (300) replicates all user interactions and program reactions of the user on the client (200) and its web browser (201) as well as the programming of the web page as it actually takes place on the web browser (201), and
wherein the emulation system (300) ascertains, based on the acquisition data (251) concerning the web browser (201) and the browser window used, mouse movements and operations as well as their positions, and assigns these positions and these individual buttons to the web page as is also done in the web browser (201) on the client (200).

6. Arrangement for acquiring and distributing user interactions, comprising a web server (100), a client (200) and an emulation system (300), wherein
- the web server (100) is designed to transmit the content of a the web page content (150) of a web page to a client (200) on request, wherein the web page content (150) has a synchronization script (151) designed to establish a connection (250) between the client (200) and an emulation system (300) running on a further server,
- wherein the synchronization script (151) causes information (253) regarding how the web page is specifically displayed and/or structured and/or functions on the client (200) to also be transmitted to the emulation system (300),
- the client (200) has a user-operable web browser (201) designed to execute the synchronization script (151), and thereby
- to establish a connection (250) between the client (200) and the emulation system (300), and
- to acquire acquisition data (251; 252) specified in the synchronization script (151) and to transmit said data over the connection (250) to the emulation system (300),
- wherein the emulation system (300) is designed to emulate user interactions and subsequent reactions of the web page content (150) in the client (200) by the emulation system (300), and
- wherein the emulation system (300) is configured such that the presence of specific user interactions or reactions of the transmitted web page content (150) results in messages in this regard being sent to one or more further servers.

7. Arrangement according to claim 6, **characterized in that** the emulation system (300) is configured in advance for the web page content (150) of the web server (100) such that
- the web server (100) transmits an additional code portion in the synchronization script (151) to the client (200), which code portion prompts the client (200) to ascertain further acquisition data,
- the emulation system (300) is designed to process the further acquisition data based on the configuration and/or the web page content (150) transmitted by the client (200) to the emulation system.

8. Arrangement according to claim 6 or 7, **characterized in that** the emulation system (300) is configured in advance for the web page content (150) of the web page of the web server (100) such that upon transmission of acquisition data (251) and optionally further acquisition data (252) originating from the execution of the respective web page content (150), the emulation system (300) prompts the execution of steps specified in advance in the configuration.

9. Arrangement according to any one of claims 6 to 8, wherein the emulation system (300) is designed to run an emulation of the web page as it is also displayed in the client (200) with the web browser (201), wherein the emulation system (300) replicates all user interactions and program reactions of the user on the client (200) and its web browser (201) as well as the programming of the web page as it actually takes place on the web browser (201), and
wherein the emulation system (300) ascertains, based on the acquisition data (251) concerning the web browser (201) and the browser window used, mouse movements and operations as well as their positions, and assigns these positions and these individual buttons to the web page as is also done in the web browser (201) on the client (200).

## Revendications

1. Procédé de détection et de distribution d'interactions d'utilisateur dans un navigateur Web, comprenant les étapes suivantes :
- transmission du contenu d'une page Web (150) d'un serveur Web (100) à un client (200), dans lequel le contenu de page Web (150) présente un script de synchronisation (151) qui est conçu pour établir une connexion (250) entre le client (200) et un système d'émulation (300) s'exécutant sur un serveur supplémentaire,
- exécution du script de synchronisation (151) au moyen du client (200), moyennant quoi une connexion (250) est établie entre le client (200) et le système d'émulation (300),
- dans lequel le script de synchronisation (151) fait en sorte que des informations (253) sur la manière dont la page Web est concrètement représentée et/ou est établie et/ou fonctionne sur le client (200) sont également transmises au système d'émulation (300),
- transmission de données de détection détectées au moyen du client (200) par l'intermédiaire de la connexion (250), de sorte que des interactions d'utilisateur et des réactions consécutives du contenu de page Web (150) dans le client (200) sont émulées par le système d'émulation (300) et sont à disposition,
- configuration du système d'émulation (300) de manière à ce que, en présence de certaines interactions d'utilisateur ou réactions du contenu de page Web (150) transmis, des messages y étant relatifs sont envoyés à un ou plusieurs serveurs supplémentaires (400).

2. Procédé selon la revendication 1, **caractérisé en ce que** le système d'émulation (300) est préalablement configuré pour la page Web (150) du serveur Web (100), de sorte que
- le serveur Web (100) transmet au client (200), dans le script de synchronisation (151), une partie de code supplémentaire qui ordonne au client (200) de déterminer des données de détection supplémentaires,
- le système d'émulation (300) traite les données de détection supplémentaires sur la base de la configuration et/ou du contenu de page Web (151) qui lui est transmis par le client (200).

3. Procédé selon la revendication 1 ou 2, **caractérisé en ce que** le système d'émulation (300) est préalablement configuré pour le contenu de page Web (150) du serveur Web (100), de sorte que le système d'émulation (300), lors de la transmission de données de détection (251) et facultativement des données de détection supplémentaires (252) qui proviennent de l'exécution du contenu de page Web (150) concerné, ordonne préalablement l'exécution d'étapes prédéterminées dans la configuration.

4. Procédé selon l'une quelconque des revendications 1 à 3, **caractérisé en ce que** le client (200) transmet au système d'émulation (300) des informations (253) concernant l'agencement et/ou la position d'éléments individuels, en particulier d'éléments de commande, dans la zone d'affichage du client (200) et **en ce qu'**une interaction d'utilisateur est considérée comme ayant eu lieu lorsque les données de détection (251) concernent des positions d'image qui sont déterminées par les informations (253).

5. Procédé selon l'une quelconque des revendications précédentes, dans lequel une émulation de la page Web s'exécute dans le système d'émulation (300), comme elle est également représentée dans le client (200) avec le navigateur Web (201), dans lequel le système d'émulation (300) reproduit toutes les interactions d'utilisateur et réactions de programme de l'utilisateur sur le client (200) et son navigateur Web (201) ainsi que la programmation de la page Web, comme cela se produit effectivement sur le navigateur Web (201), et
dans lequel le système d'émulation (300) détermine, sur la base des données de détection (251) concernant le navigateur Web (201) ainsi que la fenêtre de navigateur utilisée, les mouvements et actionnements de souris ainsi que leurs positions et attribue ces positions et ces boutons individuels de la page Web, comme cela se produit également dans le navigateur Web (201) sur le client (200).

6. Agencement pour détecter et distribuer des interactions d'utilisateur, comprenant un serveur Web (100), un client (200) et un système d'émulation (300), dans lequel :
- le serveur Web (100) est conçu pour transmettre sur demande le contenu de page Web (150) à un client (200), dans lequel le contenu de page Web (150) présente un script de synchronisation (151) qui est conçu pour établir une connexion (250) entre le client (200) et un système d'émulation (300) s'exécutant sur un serveur supplémentaire,
- dans lequel le script de synchronisation (151) fait en sorte que des informations (253) sur la manière dont la page Web est concrètement représentée et/ou est établie et/ou fonctionne sur le client (200) sont également transmises au système d'émulation (300),
- le client (200) dispose d'un navigateur Web (201) utilisable par l'utilisateur, qui est conçu pour exécuter le script de synchronisation (151), et ainsi
- établir une connexion (250) entre le client (200) et le système d'émulation (300), et
- détecter des données de détection (251 ; 252) prédéterminées dans le script de synchronisation (151) et les transmettre au système d'émulation (300) par l'intermédiaire de la connexion (250),
- dans lequel le système d'émulation (300) est conçu pour émuler des interactions d'utilisateur et des réactions consécutives du contenu de page Web (150) dans le client (200) par l'intermédiaire du système d'émulation (300), et
- dans lequel le système d'émulation (300) est configuré de sorte que, en présence de certaines interactions d'utilisateur ou réactions du contenu de page Web (150) transmis, des messages y étant relatifs sont envoyés à un ou plusieurs serveurs supplémentaires.

7. Agencement selon la revendication 6, **caractérisé en ce que** le système d'émulation (300) est préalablement configuré pour le contenu de page Web (150) du serveur Web (100), de sorte que
- le serveur Web (100) transmet au client (200), dans le script de synchronisation (151), une partie de code supplémentaire qui ordonne au client (200) de déterminer des données de détection supplémentaires,
- le système d'émulation (300) est conçu pour traiter les données de détection supplémentaires sur la base de la configuration et/ou du contenu de page Web (150) qui lui est transmis par le client (200).

8. Agencement selon la revendication 6 ou 7, **caractérisé en ce que** le système d'émulation (300) est préalablement configuré pour le contenu de page Web (150) de la page Web du serveur Web (100), de telle sorte que le système d'émulation (300), lors de la transmission de données de détection (251) et facultativement des données de détection supplémentaires (252) qui proviennent de l'exécution du contenu de page Web (150) concerné, ordonne préalablement l'exécution d'étapes prédéterminées dans la configuration.

9. Agencement selon l'une quelconque des revendications 6 à 8, dans lequel le système d'émulation (300) est conçu pour laisser s'exécuter une émulation de la page Web comme elle est également représentée dans le client (200) avec le navigateur Web (201), dans lequel le système d'émulation (300) reproduit toutes les interactions d'utilisateur et réactions de programme de l'utilisateur sur le client (200) et son navigateur Web (201) ainsi que la programmation de la page Web, comme cela se produit effectivement sur le navigateur Web (201), et
dans lequel le système d'émulation (300) détermine, sur la base des données de détection (251) concernant le navigateur Web (201) ainsi que la fenêtre de navigateur utilisée, les mouvements et actionnements de souris ainsi que leurs positions et attribue ces positions et ces boutons individuels de la page Web, comme cela se produit également dans le navigateur Web (201) sur le client (200).
